(19) Europäisches Patentamt
European Patent Office
Office européen des brevets

(11) **EP 3 602 516 B1**

(12) **EUROPÄISCHE PATENTSCHRIFT**

(45) Veröffentlichungstag und Bekanntmachung des Hinweises auf die Patenterteilung:
**31.08.2022 Patentblatt 2022/35**

(21) Anmeldenummer: **18712581.0**

(22) Anmeldetag: **20.03.2018**

(51) Internationale Patentklassifikation (IPC):
**G08G 1/16** (2006.01)    **G05D 1/02** (2020.01)
**B60Q 1/50** (2006.01)

(52) Gemeinsame Patentklassifikation (CPC):
**G08G 1/164**

(86) Internationale Anmeldenummer:
**PCT/EP2018/056984**

(87) Internationale Veröffentlichungsnummer:
**WO 2018/172334 (27.09.2018 Gazette 2018/39)**

(54) **SYSTEM UND VERFAHREN ZUR AUTOMATISCHEN STEUERUNG EINES FAHRZEUGS IN EINEM VERKEHRSWEGENETZ**

SYSTEM AND METHOD FOR AUTOMATICALLY CONTROLLING A VEHICLE IN A ROAD NETWORK

SYSTÈME ET PROCÉDÉ DE COMMANDE AUTOMATIQUE D'UN VÉHICULE DANS UN RÉSEAU ROUTIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2017   DE 102017106032**

(43) Veröffentlichungstag der Anmeldung:
**05.02.2020   Patentblatt 2020/06**

(73) Patentinhaber: **Deutsches Zentrum für Luft- und Raumfahrt e.V.**
**51147 Köln (DE)**

(72) Erfinder:
• **KLARNER, Robert**
**80331 München (DE)**
• **RUNGE, Hartmut**
**81377 München (DE)**

(74) Vertreter: **Rösler Rasch van der Heide & Partner**
**Bodenseestraße 18**
**81241 München (DE)**

(56) Entgegenhaltungen:
DE-A1- 10 210 546      DE-A1-102013 100 206
US-A- 6 084 510        US-A1- 2010 194 592
US-A1- 2013 018 572    US-A1- 2016 231 746
US-B2- 9 552 726

**Beschreibung**

Die Erfindung betrifft ein System sowie ein Verfahren zur automatischen Steuerung eines Fahrzeugs in einem Verkehrswegenetz. Die Erfindung dient der Verbesserung der Sicherheit im Straßenverkehr. Das vorgeschlagene System und Verfahren findet insbesondere Verwendung bei vollautonomen fahrenden Fahrzeugen, wie auch als entsprechendes Fahrerassistenzsystem in einem von einem Fahrer gesteuerten Fahrzeug.

Im Stand der Technik sind Fahrerassistenzsysteme für Fahrzeuge bekannt, die am Fahrzeug angeordnete Sensorsysteme zur Erfassung einer Umgebung des Fahrzeugs umfassen. Durch Auswertung der von den Sensorsystemen erfassten Daten können beispielsweise Objekte auf einer Fahrbahn oder am Fahrbahnrand erkannt und Gegenmaßnahmen zur Vermeidung einer Kollision zwischen Fahrzeug und erkannten Objekten eingeleitet werden. Diese Gegenmaßnahmen umfassen insbesondere autonome Eingriffe in die Längssteuerung und/oder Quersteuerung des Fahrzeugs.

Aus der Druckschrift US 6 084 510 A geht ein System zur Gefahrenwarnung und zum Notfallschutz hervor, bei dem Gefahren mittels Umgebungssensoren erfasst und an eine Zentraleinheit zur Auswertung übermittelt werden. Die Zentraleinheit ist dazu eingerichtet eine Gefahrenmeldung inklusive eines Gefahrenindex zu erzeugen.

Aus der Druckschrift DE 102 10 546 A1 geht ein System zur automatischen Fahrzeugführung hervor, bei dem Infrastrukturdaten drahtlos an ein Fahrzeug übermittelt werden und Befehle für die Fahrzeugführung anhand der Infrastrukturdaten berechnet werden.

Die Aufgabe der Erfindung ist es, ein System und ein Verfahren zur automatischen Steuerung eines Fahrzeugs, insbesondere eines autonom fahrenden Fahrzeugs, in einem Verkehrswegenetz zur Verfügung zu stellen, das die Sicherheit beim Betrieb des Fahrzeugs im Verkehrswegenetz verbessert.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft ein System zur automatischen Steuerung eines Fahrzeugs F in einem Verkehrswegenetz. Das System umfasst eine Zentraleinheit ZE, die jeweilige Einhüllende $EH_i$ einer Anzahl I flächiger geographischer Teilbereiche $TB_i$ des Verkehrswegenetzes sowie für jeden der geographischen Teilbereiche $TB_i$ ein zugeordnetes Attribut $K_i$ bereitstellt, mit i = 1, ..., I und $I \geq 1$ und $EH_i \in \{EH_1, ..., EH_I\} = \underline{\textbf{EH}}$ und $TB_i \in \{TB_1, ..., TB_I\} = \underline{\textbf{TB}}$, wobei zumindest einer der Teilbereiche $TB_i$ nur einen Verkehrsweg und zumindest ein weiterer der Teilbereiche $TB_i$ nur ein an einen Verkehrsweg angrenzendes Gelände umfasst. Das Attribut $K_i$ gibt hierbei eine Intensität einer Gefahr an, die sich bei einem Eindringen des Fahrzeugs F in den jeweiligen geographischen Teilbereich $TB_i$ für das Fahrzeug F selbst und/oder für im Teilbereich $TB_i$ angeordnete Objekte ergibt, mit $K_i \in \{K_1, ..., KN\} = \underline{\textbf{K}}$ und $N \geq 1$. Die Zentraleinheit ZE und das Fahrzeug F sind zur Datenkommunikation, einschließlich zur Übertragung der Einhüllenden $EH_i$ sowie der zugeordneten Attribute $K_i$ von der Zentraleinheit ZE an das Fahrzeug F eingerichtet und ausgeführt. Das Fahrzeug F weist zudem auf: eine erste Einheit zur Ermittlung der aktuellen Position POSF des Fahrzeugs im Verkehrswegenetz, eine zweite Einheit zur Ermittlung eines Abstands $d_{EH^*}(POS_F)$ des Fahrzeugs zur Einhüllenden EH* des zur Position POSF nächstliegenden Teilbereiches TB*, wobei gilt: $TB^* \in \underline{\textbf{TB}}$, und eine dritte Einheit zur Ausführung automatischer Steuereingriffe SEG in die Längs- und/oder Quersteuerung/-regelung des Fahrzeugs F, wobei die automatischen Steuereingriffe SEG abhängig von dem Abstand dEH*(POSF) und dem dem nächstliegenden Teilbereich TB* zugeordneten Attribut K* erfolgen:

$$(1) \qquad SEG = SEG(d_{EH^*}(POS_F), K^*), \text{ wobei gilt: } K^* \in \underline{\textbf{K}}.$$

Der Begriff "Fahrzeug" umfasst vorliegend vorteilhaft insbesondere Kraftfahrzeuge, Elektrofahrzeuge, Busse, Lkw's, und Motorräder.

Der Begriff "Verkehrswegenetz" versteht sich vorliegend als ein flächiges Gebiet auf, unter bzw. über der Erdoberfläche mit Verkehrswegen, wobei die Verkehrswege von Verkehrsteilnehmern (Fußgängern, Radfahrern, Krafträdern, Kraftfahrzeugen, Lkw's, Straßenbahnen, Stadtbahnen, Eisenbahnen, etc.) entsprechend bestimmungsgemäß benutzt werden können bzw. dürfen bzw. sollen. Das Verkehrswegenetz umfasst insbesondere aber nicht abschließend folgende Verkehrswege: Autobahnen, Bundesstraßen, Landstraßen, Ortsstraßen, Forststraßen, Radwege, Gehwege, Plätze, Parkplätze, Stellflächen, Schienenübergänge, Fußgängerüberwege, Randstreifen, etc.

Erfindungsgemäß umfasst der Begriff "Verkehrswegenetz" zusätzlich an Verkehrswege angrenzendes Gelände. In einem nicht beanspruchten Beispiel umfasst der Begriff "Verkehrswegenetz" auch das gesamte zwischen den einzelnen Verkehrswegen liegende Gelände. Vorteilhaft umfasst das angrenzende Gelände zumindest einen Geländestreifen im Bereich von 1 - 1.000 m seitlich von den jeweiligen Verkehrswegen.

Unter dem Begriff "Teilbereich $TB_i$" wird vorliegend ein flächiger Bereich der Erdoberfläche verstanden, der zumindest einen Verkehrsweg des Verkehrswegenetzes aufweist oder zumindest an einen solchen Verkehrsweg angrenzt. Die Teilbereiche $TB_i$ können je nach Anwendungsfall unterschiedliche (Flächen-)Größen aufweisen. Ein Teilbereich $TB_i$ kann beispielsweise einen unbeschränkten Bahnübergang und 50 m zu- bzw. 50 m abführenden Verkehrsweg umfassen oder einen Autobahnabschnitt mit einer Länge von 1 km oder einen Platz auf dem ein Weihnachtsmarkt stattfindet oder eine verkehrsberuhigte Zone vor einem Krankenhaus / einer Schule / einem Kindergarten, oder eine Fußgängerzone. Jeder Teilbereich $TB_i$ definiert vorteilhaft einen flächigen Bereich für den sich bei einem Eindringen eines Fahrzeugs F in den Teilbereich $TB_i$ für das Fahrzeug F selbst und/oder für im Teilbereich $TB_i$ angeordnete Objekte eine Gefahrenintensität ergibt, die größer Null und nicht vernachlässigbar ist. Entsprechend geben die zugeordneten Attribute $A_i$ vorteilhaft eine Gefahrenintensität an, die größer Null und nicht vernachlässigbar ist.

Die Zentraleinheit ZE umfasst vorzugsweise zumindest eine Datenverarbeitungseinheit (Computer, Server, etc.) sowie einen Datenspeicher zur Speicherung und Bereitstellung der Einhüllenden $EH_i$ und der zugeordneten Attribute $K_i$. Vorteilhaft umfasst die Zentraleinheit ZE weiterhin Kommunikationsschnittstellen zum Datentransfer zwischen der Zentraleinheit ZE und dem Fahrzeug F sowie zwischen der Zentraleinheit ZE und Eingabeschnittstellen zur Vorgabe/Eingabe von Einhüllenden $EH_i$ und zugeordneten Attributen $K_i$.

Unter dem Begriff "Einhüllende" (auch "Hüllkurve" oder "Enveloppe" genannt) wird vorliegend insbesondere der Rand bzw. die Berandung bzw. die linienhafte Begrenzung der zweidimensionalen geographischen Teilbereiche $TB_i$ verstanden. Die Einhüllenden $EH_i$ können beispielsweise als Koordinatenfunktionen und/oder als Mehrzahl von Koordinatenpunkten angegeben sein. Im letzteren Fall muss zwischen Koordinatenpunkten interpoliert werden, um jeweils die benötigte linienhafte Einhüllende $EH_i$ zu erzeugen. Vorzugsweise sind die Einhüllenden $EH_i$ in georeferenzierten Koordinaten angegeben, sodass der Abstand $d_{EH^*}(POS_F)$ leicht aus einer in georeferenzierten Koordinaten angegebenen Position POSF des Fahrzeugs F und dem bekannten Verlauf der jeweiligen nächstliegenden Einhüllenden $EH^*$ ermittelt werden kann. Vorteilhaft werden die Einhüllenden $EH_i$ und damit die Teilbereiche $TB_i$ derart gewählt, dass die Teilbereiche $TB_i$ soweit hinsichtlich ihrer Fläche minimiert sind, dass der Schutz des Teilbereichs $TB_i$ ausreichend ermöglicht wird. Die Teilbereiche $TB_i$ kann man insbesondere auch als Schutzbereiche auffassen, deren Befahren durch Fahrzeuge F entweder verboten oder nur unter Auflagen gestattet ist, wobei die dem Attribut $A_i$ zugeordnete Gefahrenintensität entsprechende Verbote oder Auflagen reflektiert.

Das Attribut $K_i$ gibt die Intensität der vorstehend definierten Gefahr für den Teilbereich $TB_i$ an. Das Attribut $K_i$ wird vorteilhaft als Zahlenwert oder als Klassenkennung einer Gefahrenklassifikation vorgegeben oder ermittelt. Das Attribut $K_i$ kann nur Werte/Kennungen aus der vorgegebenen Menge $\{K_1, ..., KN\} = \underline{K}$ annehmen, wobei die Menge $\{K_1, ..., KN\}$ auch ein reeller Zahlenbereich $[K1, KN] = \underline{K}$ sein kann. Somit kann jedem Teilgebiet $TB_i$ nur ein Attribut $A_i$ mit einem "Wert" aus $\underline{K}$ zugeordnet werden. Ein Attribut $K_i$ und damit die Intensität der Gefahr kann vorgegeben oder auf Basis eines vorgegebenen Algorithmus aus ermittelten oder vorgegebenen Parametern ermittelt werden. Im einfachsten Fall wird sowohl ein Teilbereich $TB_i$ als auch das zugeordnete Attribut $K_i$ von einer Behörde (Polizei, Stadtverwaltung, Grenzschutz etc.) vorgegeben und an die Zentraleinheit ZE bereitgestellt.

Je nach Wahl des Attributs $K_i$ kann somit einem Teilbereich $TB_i$ des Verkehrswegenetzes eine hohe oder eine niedrige Gefahrenklassifikation/Gefahrenintensität zugewiesen werden, die sich insbesondere auf die Gefährdung der in dem Teilbereich tatsächlich oder hypothetisch befindlichen Personen oder Objekte durch ein einfahrendes Fahrzeug F bezieht. Hohe Gefahrenklassifikationen werden vorteilhaft Teilbereichen $TB_i$ zugeordnet, in denen Menschen bzw. Menschenansammlungen vorhanden sind oder in denen sich bereits ein Unfall auf einem Verkehrsweg des Teilbereichs $TB_i$ ereignet hat, oder sich bei einem unbeschränkten Bahnübergang im Teilbereich $TB_i$ ein Zug nähert, oder sich beim Eindringen eines Fahrzeugs in einen solchen Teilbereich $TB_i$ ein andersartiges hohes Gefahrenpotenzial ergibt, sodass ein Eindringen eines Fahrzeugs in solche Teilbereiche $TB_i$ bspw. unter allen Umständen vermieden werden muss. Vorteilhaft werden die Steuereingriffe SEG derart ausgeführt, dass durch eine entsprechende Längs- und Quersteuerung das Fahrzeug F autonom derart gesteuert wird, dass es nicht in den jeweiligen Teilbereich $TB_i$ eindringt. Hierzu werden vorteilhaft auch Sensordaten berücksichtigt, die von zumindest einem Sensorsystem des Fahrzeugs F ermittelt werden und eine Umgebung sowie eine darin vorherrschende Verkehrssituation beschreiben, um sicherzustellen, dass die Umgebung sowie die aktuelle Verkehrssituation bei der Ausführung der Steuereingriffe SEG berücksichtigt werden. Eine mittlere und geringe Gefahrenklassifikation/-intensität wird vorteilhaft entsprechend Teilbereichen $TB_i$ zugeordnet, bei denen das Eindringen in diese bzw. das Befahren oder Durchfahren dieser Teilbereiche $TB_i$ mit Auflagen (bspw. Einhalten einer Höchstgeschwindigkeit von 30 km/h) möglich ist.

Wie bereits ausgeführt, sind die Zentraleinheit ZE und das Fahrzeug F zur Datenkommunikation, einschließlich zur Übertragung der Einhüllenden $EH_i$ sowie der zugeordneten Attribute $K_i$ von der Zentraleinheit ZE an das Fahrzeug F eingerichtet und ausgeführt. Diese Datenkommunikation erfolgt vorteilhaft über mobiles Internet oder über eine andere bekannte Funknetzwerktechnologie. Die Übertragung von Einhüllenden $EH_i$ sowie der zugeordneten Attribute $K_i$ von der Zentraleinheit ZE an das Fahrzeug F erfolgt vorteilhaft abhängig von der aktuellen Position POSF des Fahrzeugs F nur für die in einer vorgegebenen Umgebung (beispielsweise in einem Umkreis von 5 km, 10 km, 15 km oder 20 km) des Fahrzeugs F liegenden Teilbereiche $TB_i$ und/oder für Teilbereiche $TB_i$, die in einem üblichen Fahrgebiet (bspw. dem Weg von Wohnadresse zur Arbeitsadresse) des Fahrzeugs F liegen. In diesem Fall wird vom Fahrzeug F die Position

$POS_F$ des Fahrzeugs F vorteilhaft fortlaufend übermittelt. Dadurch wird auch die zu übertragende Datenmenge gemäß tatsächlicher Relevanz bzw. Geltung entsprechend reduziert.

Die erste Einheit zur Ermittlung der aktuellen Position $POS_F$ des Fahrzeugs F ist vorteilhaft ein Satelliten-Navigationsempfänger GNSS, der vorteilhaft eine georeferenzierte Position des Fahrzeugs F im Verkehrswegenetz ermittelt. Natürlich sind auch alle weiteren, heute bekannten Positionsermittlungsvorrichtungen und Kombinationen daraus als erste Einheit zu verwenden.

Die zweite Einheit ermittelt basierend auf der aktuellen Position $POS_F$ des Fahrzeugs F einen aktuellen Abstand $d_{EH*}(POS_F)$ des Fahrzeugs F zur Einhüllenden EH* des zur Position POSF nächstliegenden Teilbereiches TB*. Vorteilhaft wird der aktuelle Abstand Abstand $d_{EH*}(POS_F)$ mit einer Genauigkeit von bis zu 2 - 5 cm ermittelt. Dabei wird der Abstand $d_{EH*}(POS_F)$ vorteilhaft als aktueller Minimalabstand zwischen dem Fahrzeug F und der Einhüllenden EH* ermittelt. Die zweite Einheit umfasst vorteilhaft einen Prozessor mit einem entsprechenden Programm zur Ermittlung des Abstands $d_{EH*}(POS_F)$. Der Abstand dEH*(POSF) kann eine metrische Distanz (bspw. in Meter) oder eine zeitliche Distanz (bspw. in Sekunden) bis zum Erreichen der Einhüllenden EH* bei Fortschreibung der aktuell gefahrenen Eigengeschwindigkeit des Fahrzeugs F angeben.

Die dritte Einheit ermöglicht die Ausführung automatischer Steuereingriffe SEG in die Längs- und/oder Quersteuerung/-regelung des Fahrzeugs F. Hierzu ist die dritte Einheit vorteilhaft mit der Motorsteuerung und/oder der Steuerung des Bremssystems und/oder mit Aktoren zur Einstellung der Quersteuerung des Fahrzeugs F verbunden. Die Steuereingriffe SEG erfolgen erfindungsgemäß abhängig von einer Annäherung an den nächstliegenden Teilbereich TB*, d.h. abhängig vom Abstand $d_{EH*}(POS_F)$ und gleichzeitig abhängig von dem den nächstliegenden Teilbereiches TB* zugeordneten Attribut K*.

Vorteilhaft ist die dritte Einheit mit zumindest einem im Fahrzeug F vorhandenen Sensorsystem verbunden, das eine Umgebung des Fahrzeugs sowie darin angeordnete Objekte erfasst und entsprechende Umgebungsdaten erzeugt. Vorteilhaft wird von dem Sensorsystem eine in der Umgebung vorhandene Verkehrssituation ermittelt und an die dritte Einheit bereitgestellt. Vorteilhaft erfolgt die Ausführung der automatischen Steuereingriffe SEG in die Längs- und/oder Quersteuerung/-regelung des Fahrzeugs F abhängig von den Umgebungsdaten und/oder von Daten zur ermittelten Verkehrssituation in dieser Umgebung. Das Sensorsystem umfasst vorteilhaft einen Radarsensor, einen LIDAR Sensor, einen Laserscanner, einen Mikrowellenscanner, einen Ultraschallsensor, eine optische Kamera oder eine Kombination daraus.

Das vorgeschlagene System ermöglicht somit eine Vielzahl von fahrerunabhängigen, d.h. autonom vom Fahrzeug F ausgeführten Steuereingriffen, um Gefahren, die sich beim Annähern an Teilbereiche $TB_i$ bzw. beim Durchfahren von Teilbereichen $TB_i$ des Verkehrswegenetzes ergeben, zu minimieren bzw. auszuschließen. Die Fahrzeuge F können vollständig autonom fahrende Fahrzeuge, als auch Fahrzeuge sein, die von einem Fahrer gesteuert werden, wobei bei letzteren der von der dritten Einheit initiierte autonom ausgeführte Steuereingriff SEG vom jeweiligen Fahrer des Fahrzeugs F vorteilhaft nicht übersteuert (engl. "over ruled") werden kann.

Eine vorteilhafte Weiterbildung des vorgeschlagenen Systems zeichnet sich dadurch aus, dass die dritte Einheit dazu ausgeführt und eingerichtet ist, automatische Steuereingriffe $SEG(d_{EH*}(POS_F), K*)$ erst dann auszuführen, wenn der Abstand $d_{EH*}(POS_F)$ zu dem zur Position POSF nächstliegenden Teilbereich TB* einen vom zugeordneten Attribut K* abhängigen vorgegebenen Abstandsgrenzwert $G_{K*}$ erreicht oder unterschreitet. Der Abstandsgrenzwert $G_{K*}$ wird vorteilhaft ebenfalls von der Zentraleinheit an das Fahrzeug F übermittelt.

Eine vorteilhafte Weiterbildung des vorgeschlagenen Systems zeichnet sich dadurch aus, dass das Fahrzeug F eine Prädiktionseinheit aufweist, mit der eine zukünftige Fahrtrajektorie $FT_{präd}$ (bspw. der wahrscheinlichste vorausliegende Weg) des Fahrzeugs F ermittelbar ist. Vorteilhaft ist die dritte Einheit dazu ausgeführt und eingerichtet, die automatischen Steuereingriffe SEG zudem abhängig von der Fahrtrajektorie $FT_{präd}$ zu ermitteln und auszuführen: SEG = $SEG(d_{EH*}(POS_F), K*, FT_{präd})$.

Eine vorteilhafte Weiterbildung des vorgeschlagenen Systems zeichnet sich dadurch aus, dass das Fahrzeug F eine Einheit aufweist, die die die aktuelle Geschwindigkeit $V_{FZ}$ des Fahrzeugs F ermittelt. Vorteilhaft ist die dritte Einheit dazu ausgeführt und eingerichtet, die automatischen Steuereingriffe SEG zudem abhängig von der Geschwindigkeit $V_{FZ}$ zu ermitteln und auszuführen: SEG = $SEG(d_{EH*}(POS_F), K*, V_{FZ})$.

Eine vorteilhafte Weiterbildung des vorgeschlagenen Systems zeichnet sich dadurch aus, dass die automatischen Steuereingriffe $SEG(d_{EH*}(POS_F), K*)$ zumindest einen der folgenden Steuereingriffe umfassen: eine Verringerung der Geschwindigkeit des Fahrzeugs F auf eine von K* und/oder von $d_{EH*}(POS_F)$ abhängige vorgegebene Geschwindigkeit $v_{soll}$ und/oder ein Abbremsen des Fahrzeugs F in den Stillstand, und/oder eine Längs- und Quersteuerung derart, dass das Fahrzeug F nicht in den nächstliegenden Teilbereich TB* eindringt. Insbesondere erfolgt letztgenannter und vorletztgenannter Steuereingriff vorteilhaft unter Berücksichtigung von im Fahrzeug F aktuell erfassten Umgebungsdaten, um Kollisionen des Fahrzeugs F zu vermeiden.

Eine vorteilhafte Weiterbildung des vorgeschlagenen Systems zeichnet sich dadurch aus, dass das Fahrzeug F eine vierte Einheit aufweist, die abhängig vom Abstand $d_{EH*}(POS_F)$ zu dem der Position POSF nächstliegenden Teilbereich TB* und abhängig vom zugeordneten Attribut K* automatisch ein System des Fahrzeugs F zur Ausgabe optischer und/oder akustischer und/oder haptischer Signale an einen oder mehrere Insassen des Fahrzeugs F und/oder an eine Umgebung des Fahrzeugs F ansteuert. Durch die Ausgabe dieser Signale kann der/die Insassen bspw. darauf hingewiesen werden, dass sich das Fahrzeug F einem Teilbereich TB* nähert, für den bei Weiterfahrt ein erhöhtes Gefahrenpotenzial vorliegt. Alternativ oder zusätzlich kann durch Ausgabe eines dieser Signale das Ausführen eines autonomen Steuereingriffs SEG angezeigt werden.

Natürlich ist auch die Einfahrt des Fahrzeugs F in einen nächstliegenden Teilbereich TB* möglich, sofern das zugeordnete Attribut K* bestimmte vorgegebene Kriterien erfüllt. Fährt das Fahrzeug F in einen solchen nächstliegenden Teilbereich TB* ein, so wird das Fahrzeug F abhängig von dem zugeordneten Attribut K* beim Befahren des Teilbereichs TB* vorteilhaft dazu veranlasst, optische und/oder akustische Warnsignale an eine Umgebung des Fahrzeugs F auszugeben. In dieser Weiterbildung können somit Teilbereiche TB* definiert werden, in denen das Fahrzeug F langsam fährt, beispielsweise <= 40 km/h oder <= 30 km/h, sodass insbesondere bei Elektrofahrzeugen und Hybridfahrzeugen mit Elektrobetrieb sowie auch e-Bikes, bei denen vom Fahrzeug nur eine geringe Lärmemission ausgeht, und deshalb ein solches Fahrzeug von Passanten möglicherweise akustisch nicht oder gegebenenfalls zu spät wahrgenommen werden kann. In einem solchen Fall wird vorteilhaft vom Fahrzeug F automatisch ein akustisches und/oder optisches Signal in die Umgebung ausgegeben, sodass Passanten ein herannahen des Fahrzeug F entsprechend frühzeitig wahrnehmen können.

Eine vorteilhafte Weiterbildung des vorgeschlagenen Systems zeichnet sich dadurch aus, dass die vierte Einheit einen Monitor/ein Display und/oder eine Lichtquelle und/oder eine akustische Ausgabeeinheit und/oder Einheit zur Ausgabe haptischer Informationen umfasst.

Eine vorteilhafte Weiterbildung des vorgeschlagenen Systems zeichnet sich dadurch aus, dass das Fahrzeug F eine fünfte Einheit aufweist, die abhängig vom Abstand $d_{EH*}(POS_F)$ zu dem der Position POSF nächstliegenden Teilbereich TB* und abhängig vom zugeordneten Attribut K* automatisch das Fahrzeug F in den Stillstand abbremst und anschließend elektrisch stilllegt. Bei entsprechend gewählten Teilbereichen TB* können gezielt Fahrzeuge F bspw. auf einem Straßenabschnitt abgebremst und stillgelegt werden.

Eine vorteilhafte Weiterbildung des vorgeschlagenen Systems zeichnet sich dadurch aus, dass die Zentraleinheit eine Schnittstelle zur manuellen Eingabe/Vorgabe von Einhüllenden $EH_i$ von flächigen geographischen Teilbereichen $TB_i$ des Verkehrswegenetzes aufweist. Diese Schnittstelle kann zur Definition eines Teilbereichs $TB_i$ mittels vorgegebener Begrenzungskoordinaten eine Eingabetastatur umfassen. Alternativ oder zusätzlich kann diese Schnittstelle einen Touchscreen, eine Computermouse, einen Joystick, eine Gestenerkennung zur grafischen Eingabe der zugeordneten Einhüllenden $EH_i$ umfassen. Vorteilhaft greift diese Schnittstelle auf einen Archivspeicher zu, in dem Einhüllende $EH_i$ gespeichert und manuell auswählbar sind. Vorteilhaft können für auf den Archivspeicher hinterlegte Einhüllende $EH_i$ Startzeiten und Endzeiten einer jeweiligen Aktivierung der den jeweiligen Einhüllenden $EH_i$ zugeordneten Teilbereiche $TB_i$ gespeichert werden. Die Aktivierung/Deaktivierung der Teilbereiche $TB_i$ und das Bereitstellen der Einhüllenden $EH_i$ erfolgt dann vorteilhaft abhängig vom Fortschreiten der aktuellen Zeit t. So sind auch temporär wiederkehrende Aktivierungen / Deaktivierungen von Teilbereichen $TB_i$ möglich. Diese Schnittstelle kann insbesondere von Behörden, von der Polizei, von Verkehrsüberwachungseinrichtungen etc. genutzt werden, um beispielsweise bestimmte Teilbereiche $TB_i$ des Verkehrswegenetzes zeitweise oder andauernd zu definieren und ihnen ein entsprechendes "Gefahren-" Attribut $A_i$ zuzuordnen. Diese Schnittstelle kann stationär oder mobil angeordnet sein, wobei die Schnittstelle jeweils mit der Zentraleinheit zur Datenübermittlung verbunden ist. Insbesondere können mehrere derartige Schnittstellen vorhanden sein.

Eine vorteilhafte Weiterbildung des vorgeschlagenen Systems zeichnet sich dadurch aus, dass eine sechste Einheit vorhanden ist, die auf Basis der von einem Fahrzeug FZ im Verkehrswegenetz an die sechste Einheit übertragenen aktuellen Position $POS_{FZ}$ des Fahrzeugs FZ und abhängig von einem an die sechste Einheit vom Fahrzeug FZ an der Position $POS_{FZ}$ übertragenen Attribut $A_{FZ}$, das einen kritischen technischen und/oder verkehrstechnischen Zustand des Fahrzeugs FZ angibt, automatisch eine Einhüllende EH** eines flächigen geographischen Teilbereichs TB** des Verkehrswegenetzes um die Position $POS_{FZ}$ und ein dem Teilbereich TB** zugeordnetes Attribut K** ermittelt und an die Zentraleinheit bereitstellt, wobei gilt TB** $\in$ **_TB_** und K** $\in$ **_K._**

Die sechste Einheit umfasst vorteilhaft einen Prozessor und ein entsprechendes darauf lauffähiges Programm. Die sechste Einheit ist vorteilhaft in der Zentraleinheit angeordnet.

Vorteilhaft gibt das Attribut $A_{FZ}$ zumindest einen kritischen technischen und/oder einen verkehrstechnischen Zustand des Fahrzeugs FZ aus der folgenden nicht abschließenden Liste an:

- Auslösen eines Airbags des Fahrzeugs FZ,
- Aktivieren einer Warnblinkanlage des Fahrzeugs FZ,
- Ansprechen einer Feuerwarnanlage des Fahrzeugs FZ,
- Aktivieren einer Feuerlöschvorrichtung des Fahrzeugs FZ,
- Auslösen eines eCall Modus zur automatischen Notfall-Benachrichtigung im Fahrzeug FZ,
- Überschreiten eines vorgegebenen Beschleunigungsgrenzwerts G1 durch das Fahrzeug FZ,

- das Fahrzeug FZ fährt in dem Verkehrswegenetz in einer nicht zugelassenen Fahrtrichtung und/oder nicht zugelassenen Fahrspur.

Das Attribut $A_{FZ}$ kann unterschiedliche Werte oder Kennungen aufweisen, die eine unterschiedliche Kritikalität der Zustände angeben. Sobald ein vorstehend aufgeführtes oder ein einen anderen kritischen Zustand beschreibendes Attribut $A_{FZ}$ vom Fahrzeug FZ an der Position $POS_{FZ}$ an die sechste Einheit übermittelt ist, wird in dieser Ausführungsform von der sechsten Einheit automatisch eine Einhüllende EH** eines flächigen geographischen Teilbereichs TB** des Verkehrswegenetzes um die Position $POS_{FZ}$ und ein dem Teilbereich TB** zugeordnetes Attribut K** ermittelt und an die Zentraleinheit bereitgestellt.

Die Funktionsweise sei in folgendem Beispiel erläutert. Das Fahrzeug FZ erleidet bei der Fahrt auf der Autobahn durch vorhandenes Aquaplaning einen Unfall, in dessen Folge ein Airbag des Fahrzeugs FZ auslöst. Das Fahrzeug FZ ist dazu eingerichtet, in diesem Fall automatisch dessen genaue Position $POS_{FZ}$ sowie ein zugeordnetes Notsignal (Attribut $A_{FZ}$) an die sechste Einheit zu übermitteln. Die sechste Einheit erkennt auf Basis der übermittelten Position $POS_{FZ}$ und des übermittelten zugeordneten Attributs $A_{FZ}$, dass sich das Fahrzeug FZ nicht mehr bewegt und dass ein Airbag des Fahrzeugs FZ ausgelöst hat. Auf Basis dieser Informationen ermittelt die sechste Einheit eine Einhüllende EH** eines flächigen geographischen Teilbereichs TB** des Verkehrswegenetzes um die Position $POS_{FZ}$ und ein dem Teilbereich TB** zugeordnetes Attribut K**. Der Teilbereich umfasst vorliegend beispielsweise einen Streckenabschnitt der betroffenen Fahrbahnen der Autobahn von 500 m vor und nach der Position $POS_{FZ}$. Das zugeordnete Attribut A** gibt dabei eine hohe Gefahrenintensität an, sodass bei Fahrzeugen F, die sich dem Teilbereich TB** nähern, automatische Steuerangriffe derart erfolgen, dass sichergestellt ist, dass die Fahrzeuge F nicht in den Teilbereich TB** einfahren.

Das Fahrzeug FZ verfügt vorteilhaft über ein Sensorsystem, das zur Ermittlung des Attributs $A_{FZ}$ eingerichtet und ausgeführt ist und das zunächst einen technischen Zustand des Fahrzeugs FZ selbst und/oder einen verkehrstechnischen Zustand des Fahrzeugs FZ in einer Verkehrsumgebung ermittelt. Hierzu verfügt das Fahrzeug vorteilhaft über eine Vielzahl von Sensoren, die einen aktuellen Fahrzeugsystemzustand ermitteln und analysieren und/oder über Sensoren, die eine Verkehrssituation in der Umgebung des Fahrzeugs FZ ermitteln und analysieren. Sofern das/die Analyseergebnisse (des technischen und/oder verkehrstechnischen Zustandes des Fahrzeugs FZ) bspw. durch Klassifikation in vorgegebene Klassen als "kritisch" erkannt wird, wird ein der jeweiligen kritischen Klasse zugeordnetes Attribut $A_{FZ}$ erzeugt/ermittelt.

Eine vorteilhafte Weiterbildung des vorgeschlagenen Systems zeichnet sich dadurch aus, dass für die Einhüllende EH** des flächigen geographischen Teilbereichs TB** folgende Zeitabhängigkeit gilt:

$$(2) \qquad EH^{**} = EH^{**}(POS_{FZ}(t)) \text{ und } TB^{**} = TB^{**}(POS_{FZ}(t)).$$

Vorteilhaft übermitteln Fahrzeuge FZ hierzu ihre aktuelle Position $POS_{FZ}(t)$ an die Zentraleinheit ZE. Auf Basis der aktuellen Position $POS_{FZ}(t)$ kann von der Zentraleinheit ZE in Kenntnis des Verkehrswegenetzes ermittelt werden, ob ein Fahrzeug FZ ein "Geisterfahrer" ist, d.h. beispielsweise auf einer Autobahn auf einer Fahrspur entgegen der eigentlichen Fahrtrichtung fährt. Die vorgeschlagene Weiterbildung ermöglicht, wie angegeben, die Definition von zeitvariablen Teilbereichen TB** bzw. von zeitvariablen Einhüllenden EH**. Diese Weiterbildung eignet sich daher insbesondere zur Definition von zeitvariablen Teilbereichen TB** (bspw. eine zeitvariable, sich mit einem Fahrzeug FZ mitbewegende Schutzzone) um bspw. eine Schutzzone um ein in falscher Richtung bzw. auf einer falschen Fahrbahn fahrendes Fahrzeug FZ "Geisterfahrer" zu definieren. Sobald sich andere Fahrzeuge F diesen Schutzzonen nähern, können beispielsweise autonome Lenkeingriffe derart erfolgen, dass sie autonom am Straßenrand zum Stillstand gebracht werden.

In einer vorteilhaften Weiterbildung sind mehrere ebensolche Fahrzeuge $F_p$ vorhanden, wobei diese Fahrzeuge $F_p$ zusätzlich zur Datenkommunikation untereinander ausgerüstet und eingerichtet sind. Weiterhin vorteilhaft sind diese Fahrzeuge $F_p$ dazu ausgeführt und eingerichtet, dass sie erkennen, ob ein kritischer technischer und/oder ein kritischer verkehrstechnischer Zustand des jeweiligen Fahrzeugs $F_p$ vorliegt. Weiterhin vorteilhaft sind diese Fahrzeuge $F_p$ dazu ausgeführt und eingerichtet, dass bei Vorliegen eines solchen kritischen Zustands eines $F_{p*}$ der Fahrzeuge $F_p$, das betreffende Fahrzeug $F_{p*}$ automatisch oder veranlasst durch eine Eingabe eines betreffenden Fahrzeugnutzers eine Einhüllende EH**** eines flächigen geographischen Teilbereichs TB**** des Verkehrswegenetzes um die Position $POS_{F_{p*}}$ des Fahrzeugs $F_{p*}$ und ein dem Teilbereich TB**** zugeordnetes Attribut K**** ermittelt und an Fahrzeuge $F_p$ in einer Umgebung des Fahrzeugs $F_{p*}$ übermittelt.

In dieser Weiterbildung können Fahrzeuge $F_{p*}$ (bspw. Schneepflüge, Schwerlasttransporte, Gefahrentransporte, Konvois, landwirtschaftliche Maschinen, Baufahrzeuge auf Wanderbaustellen, Schienenfahrzeuge, die sich in einem Schienennetz bewegen, etc.) um die Position $POS_{F_{p*}}$ des jeweiligen Fahrzeugs $F_{p*}$ einen Teilbereich TB**** mit einem zugeordneten Attribut K**** erzeugen und an Fahrzeuge $F_p$ in einer Umgebung (beispielsweise im Umkreis von ein bis 2 km) übermitteln. Im Falle, dass das Fahrzeug $F_{p*}$ ein Schienenfahrzeug ist, lassen sich damit bspw. gezielt Unfälle an Bahnübergängen (Kreuzungen von Verkehrswegenetz und Schienennetzes) verhindern.

Weiterhin kann ein solcher Teilbereich TB**** mit einem zugeordneten Attribut K**** auch von einem Fahrzeug $F_{p*}$ automatisch ermittelt und an andere Fahrzeuge $F_p$ übermittelt werden, sobald das Fahrzeug $F_{p*}$ intern ermittelt, dass der Betrieb des Fahrzeugs $F_{p*}$ gegen vorgegebene Regeln, insbesondere Verkehrsregeln verstößt. Insbesondere ist es somit möglich, dass das Fahrzeug $F_{p*}$ sofern es zum "Geisterfahrzeug" wird, d.h. dass das Fahrzeug $F_{p*}$ auf einer Fahrbahn entgegen einer für die Fahrbahn vorgesehenen Fahrtrichtung fährt oder das Fahrzeug $F_{p*}$ zu schnell fährt einen solchen Teilbereich TB**** mit einem zugeordneten Attribut K**** erzeugt.

Eine vorteilhafte Weiterbildung des vorgeschlagenen Systems zeichnet sich dadurch aus, dass eine siebte Einheit vorhanden ist, die auf Basis eines von einer an einer Position $POS_{infra}$ im Verkehrswegenetz angeordneten Verkehrsinfrastruktureinheit $V_{infra}$, die zumindest ein Sensorsystem zur Erfassung eines Verkehrszustandes und/oder eines meteorologischen Zustandes in einer Umgebung der Verkehrsinfrastruktureinheit $V_{infra}$ aufweist, an die siebte Einheit übertragenen Attributes $A_{infra}$, das das Vorliegen eines kritischen Verkehrszustands und/oder einen kritischen meteorologischen Zustands in der Umgebung der Verkehrsinfrastruktureinheit $V_{infra}$ angibt, automatisch eine Einhüllende EH*** eines flächigen geographischen Teilbereichs TB*** um die Position $POS_{infra}$ und ein zugeordnetes Attribut A*** ermittelt und an die Zentraleinheit ZE bereitstellt, wobei gilt: TB*** $\in$ **$\underline{TB}$** und K*** $\in$ **$\underline{K}$,** und wobei die Infrastruktureinheit $V_{infra}$ dazu ausgeführt und eingerichtet ist, auf Basis von mit dem Sensorsystem erfassten Sensordaten ein Vorliegen eines kritischen Verkehrszustandes und/oder eines kritischen meteorologischen Zustandes zu und ein zugeordnetes Attributs $A_{infra}$ zu ermitteln.

Unter dem Begriff "Infrastruktureinheit $V_{infra}$" wird vorliegend eine ortsfeste Einheit verstanden, die über ein entsprechendes Sensorsystem, wie vorstehend beschrieben, verfügt oder zumindest mit einem solchen verbunden ist. Die Infrastruktureinheit kann beispielsweise ein Ampelsystem, ein Verkehrsschild, eine Leitplanke, ein Verkehrsleitsystem, ein Sensor, der Personen auf der Fahrbahn oder an einem Fußgängerüberweg detektiert, oder eine meteorologische Messstation etc. sein.

Die siebte Einheit umfasst vorteilhaft einen Prozessor und ein entsprechendes darauf lauffähiges Programm. Die siebte Einheit ist vorteilhaft in der Zentraleinheit angeordnet. Das Attribut $A_{infra}$ kann unterschiedliche Werte oder Kennungen aufweisen, die eine unterschiedliche Kritikalität der Zustände angeben.

Vorteilhaft gibt das Attribut $A_{infra}$ für eine vom entsprechenden Sensorsystem erfasste Umgebung zumindest einen kritischen Verkehrszustand und/oder einen kritischen meteorologischen Zustand aus folgender nicht abschließender Liste an:

- Vorliegen eines Unfalls,
- es kommt zu Wildwechsel,
- ein Fahrzeug fährt in einer falschen, nicht zugelassenen Fahrtrichtung und/oder Fahrspur,
- es nähert sich ein Zug einem unbeschränkten/beschränkten Bahnübergang an,
- Menschen und/oder Objekte befinden sich auf einem Verkehrsweg,
- eine Menschenansammlung befindet sich seitlich eines Verkehrswegs,
- auf einem Verkehrsweg herrscht Aquaplaning,
- es herrscht Schneefall vor,
- es herrscht Glatteisgefährdung bzw. Blitzeisgefährdung vor,
- es herrscht starker Regen vor,
- es herrscht starker Seitenwind bzw. böiger Wind vor,
- es herrscht Nebel oder Rauch mit Sichtweiten unter einem vorgegebenen Grenzwert vor,
- es liegen Vereisungsbedingungen vor.

Das vorgeschlagene System und Verfahren findet insbesondere Verwendung bei vollautonomen fahrenden Fahrzeugen, wie auch als entsprechendes Fahrerassistenzsystemen in einem von einem Fahrer gesteuerten Fahrzeug. Im ersten Fall werden die durch die Zentraleinheit ZE für die Teilbereiche $TB_i$ vorgegebenen Attribute K* automatisch in entsprechende Steuer- und Regelbefehle umgesetzt. Im zweiten Fall ist der Mensch noch als aktiver Fahrer tätig, wird aber von einem entsprechenden Fahrerassistenzsystem überwacht, wobei nur im Gefahrenfall automatische Gegenmaßnahmen (automatisierte Steuereingaben) erfolgen. Diese Gegenmaßnahmen umfassen die Ausgabe von Warnsignalen bis hin zum aktiven Gegenlenken oder Abbremsen des Fahrzeugs F.

Ein weiterer Aspekt der vorliegenden Erfindung betrifft ein Verfahren zur automatischen Steuerung eines Fahrzeugs F in einem Verkehrswegenetz, mit folgenden Schritten:
Bereitstellen jeweiliger Einhüllender $EH_i$ einer Anzahl I flächiger geographischer Teilbereiche $TB_i$ des Verkehrswegenetzes sowie für jeden der geographischen Teilbereiche $TB_i$ Bereitstellen eines zugeordneten Attributs $K_i$ durch eine Zentraleinheit ZE, mit i = 1, ..., I und I $\geq$ 1 und $TB_i$ $\in$ $\{TB_1, ..., TB_I\}$ = **$\underline{TB}$**, wobei zumindest einer der Teilbereiche $TB_i$ nur einen Verkehrsweg und zumindest ein weiterer der Teilbereiche $\overline{TB_i}$ nur ein an einen Verkehrsweg angrenzendes Gelände umfasst, wobei das Attribut $K_i$ eine Gefahrenintensität angibt, die sich bei einem Eindringen des Fahrzeugs F in den jeweiligen geographischen Teilbereich $TB_i$ für das Fahrzeug F und/oder sich für im Teilbereich $TB_i$ angeordnete Objekte ergibt, mit $K_i \in \{K_1, ..., KN\}$ = Kund $N \geq 1$; Übermitteln einer oder mehrerer Einhüllenden $EH_i$ sowie der zugeordneten Attribute $K_i$ von der Zentraleinheit ZE an das Fahrzeug F; Ermitteln der aktuellen Position $POS_F$ des Fahrzeugs F im Verkehrswegenetz; Ermitteln eines Abstands $d_{EH*}(POS_F)$ des Fahrzeugs F zur Einhüllenden $EH*$ des zur Position POSF nächstliegenden Teilbereiches $TB*$, wobei gilt: $TB* \in \textbf{\textit{TB}};$ Ausführen automatischer Steuereingriffe SEG in die Längs- und/oder Quersteuerung/-regelung des Fahrzeugs F, wobei die automatischen Steuereingriffe SEG abhängig von dem Abstand dEH*(POSF) und dem den nächstliegenden Teilbereiches $TB*$ zugeordneten Attribut $K*$ erfolgen:

$$(1) \qquad SEG = SEG(d_{EH*}(POS_F), K*), \text{ wobei gilt: } K* \in \underline{\textbf{\textit{K}}}.$$

Vorteilhafte Ausführungsformen und Vorteile des vorgeschlagenen Verfahrens ergeben sich durch eine analoge und sinngemäße Übertragung der vorstehend in mit dem vorgeschlagenen System gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1 einen schematischen Aufbau eines vorgeschlagenen Systems,

Fig. 2 einen Ablaufplan eines vorgeschlagenen Verfahrens.

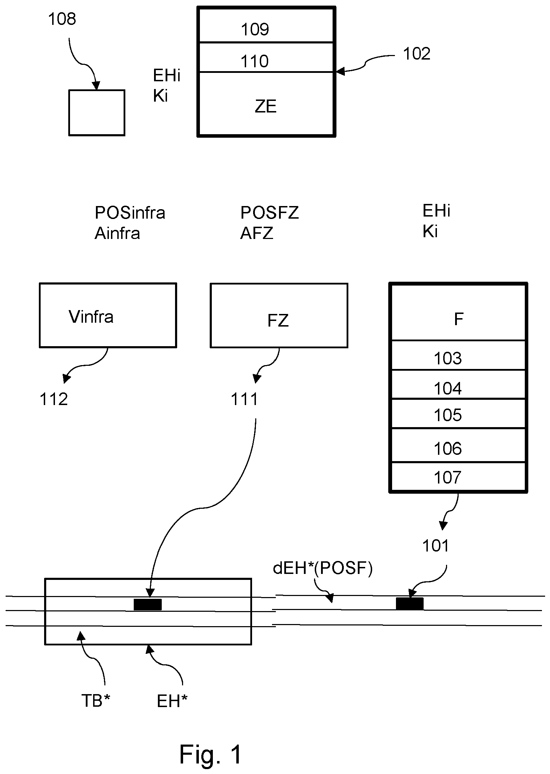

**Fig. 1** zeigt einen schematischen Aufbau eines vorgeschlagenen Systems zur automatischen Steuerung eines Fahrzeugs F 101 in einem Verkehrswegenetz, mit einer Zentraleinheit ZE 102, die jeweilige Einhüllende $EH_i$ einer Anzahl I flächiger geographischer Teilbereiche $TB_i$ des Verkehrswegenetzes sowie für jeden der geographischen Teilbereiche $TB_i$ ein zugeordnetes Attribut $K_i$ bereitstellt, mit i = 1, ..., I und I $\geq$ 1 und $TB_i \in \{TB_1, ..., TB_I\} = \textbf{\textit{TB}}$, wobei das Attribut $K_i$ eine Intensität einer Gefahr angibt, die sich bei einem Eindringen des Fahrzeugs F 101 in den jeweiligen geographischen Teilbereich $TB_i$ sich für im Teilbereich $TB_i$ angeordnete Objekte ergibt, mit $K_i \in \{K_1, ..., K_N\} = \textbf{\textit{K}}$ und N $\geq$ 1.

Die Zentraleinheit ZE 102 und das Fahrzeug F 101 sind zur Datenkommunikation, einschließlich zur Übertragung der Einhüllenden $EH_i$ sowie der zugeordneten Attribute $K_i$ von der Zentraleinheit 102 an das Fahrzeug F 101 eingerichtet und ausgeführt. Hierzu verfügen sowohl die Zentraleinheit ZE 102 und auch das Fahrzeug F 101 über entsprechende Sende-/ Empfangseinheiten für mobiles Internet.

Das Fahrzeug F 101 weist auf: eine erste Einheit 103 zur Ermittlung der aktuellen Position POSF des Fahrzeugs F 101 im Verkehrswegenetz, eine zweite Einheit 104 zur Ermittlung eines Abstands $d_{EH*}(POS_F)$ des Fahrzeugs F 101 zur Einhüllenden $EH*$ des zur Position POSF nächst liegenden Teilbereiches $TB*$, wobei gilt: $TB* \in \underline{\textbf{\textit{TB}}}$, und eine dritte Einheit 105 zur Ausführung automatischer Steuereingriffe SEG in die Längs- und/oder Quersteuerung/regelung des Fahrzeugs F 101, wobei die automatischen Steuereingriffe SEG abhängig von dem Abstand $d_{EH*}(POS_F)$ und dem dem nächstliegenden Teilbereich $TB*$ zugeordneten Attribut $K*$ erfolgen:

$$SEG = SEG(d_{EH*}(POS_F), K*), \text{ wobei gilt: } K* \in \underline{\textbf{\textit{K}}}.$$

Das Fahrzeug F 101 weist weiterhin eine vierte Einheit 106 auf, die abhängig vom Abstand $d_{EH*}(POS_F)$ zu dem der Postion POSF nächstliegenden Teilbereich $TB*$ und abhängig vom zugeordneten Attribut $K*$ automatisch ein System des Fahrzeugs F 101 zur Ausgabe optischer und akustischer Signale an Insassen des Fahrzeugs F 101 sowie an eine Umgebung des Fahrzeugs F 101 ansteuert. Sowohl die Insassen als auch die Umgebung, d.h. insbesondere andere Fahrzeuge, werden durch die ausgegebenen Signale beispielsweise davor gewarnt, dass das Fahrzeug F 101 autonom Steuersignale für die Längs- und/oder Quersteuerung erzeugt und umsetzt.

Das Fahrzeug F 101 weist weiterhin eine fünfte Einheit 107 auf, die abhängig vom Abstand $d_{EH*}(POS_F)$ zu dem der Position POSF nächstliegenden Teilbereich $TB*$ und abhängig vom zugeordneten Attribut $K*$ automatisch das Fahrzeug F 101 in den Stillstand abbremst und anschließend elektrisch stilllegt.

Die Zentraleinheit 102 weist eine Schnittstelle 108 zur manuellen Eingabe von Einhüllenden $EH_i$ von flächigen geographischen Teilbereichen $TB_i$ des Verkehrswegenetzes auf.

Die Zentraleinheit ZE 102 weist weiterhin eine sechste Einheit 109 auf, die auf Basis der von einem Fahrzeug FZ im Verkehrswegenetz an die sechste Einheit 109 übertragenen aktuellen Position $POS_{FZ}$ des Fahrzeugs FZ und abhängig von einem an die sechste Einheit 109 vom Fahrzeug FZ übertragenen positionsabhängigen Attribut $A_{FZ}(POS_{FZ})$, das einen kritischen technischen und/oder verkehrstechnischen Zustand des Fahrzeugs FZ angibt, automatisch eine Einhüllende $EH**$ eines flächigen geographischen Teilbereichs $TB**$ des Verkehrswegenetzes um die Position $POS_{FZ}$ und ein dem Teilbereich $TB**$ zugeordnetes Attribut $K**$ ermittelt und an die Zentraleinheit ZE (102)

bereitstellt, wobei gilt TB** $\in$ **TB** und K** $\in$ **K**,

Die Zentraleinheit ZE 102 weist weiterhin eine siebte Einheit 110 auf, die auf Basis eines von einer an einer Position $POS_{infra}$ im Verkehrswegenetz angeordneten Verkehrsinfrastruktureinheit $V_{infra}$, die zumindest ein Sensorsystem zur Erfassung eines Verkehrszustandes und/oder eines meteorologischen Zustandes in einer Umgebung der Verkehrsinfrastruktureinheit $V_{infra}$ aufweist, an die siebte Einheit 110 übertragenen Attributes $A_{infra}$, das das Vorliegen eines kritischen Verkehrszustands und/oder einen kritischen meteorologischen Zustand in der Umgebung der Verkehrsinfrastruktureinheit $V_{infra}$ angibt, automatisch eine Einhüllende EH*** eines flächigen geographischen Teilbereichs TB*** um die Position $POS_{infra}$ und ein zugeordnetes Attribut A*** ermittelt und an die Zentraleinheit ZE 102 bereitstellt, wobei gilt: TB*** $\in$ **TB** und K*** $\in$ **K**, und wobei die Infrastruktureinheit $V_{infra}$ dazu ausgeführt und eingerichtet ist, auf Basis von mit dem Sensorsystem erfassten Sensordaten ein Vorliegen eines kritischen Verkehrszustandes und/oder eines kritischen meteorologischen Zustandes und ein zugeordnetes Attribut $A_{infra}$ zu ermitteln. Das Sensorsystem umfasst vorteilhaft einen Kamerasensor, Lasersensor, Ultraschallsensor, Radarsensor, Temperatursensor, Feuchtesensor, Taupunktsensor, Niederschlagssensor, Leitfähigkeitssensor, Vereisungssensor oder eine Kombination daraus.

Der untere Teil der Fig. 1 zeigt eine schematisierte Darstellung einer zweispurigen Straße wobei das Fahrzeug FZ 111 verunfallt ist und der Airbag des Fahrzeugs FZ 111 ausgelöst hat. Das Fahrzeug FZ 111 hat daraufhin an die Zentraleinheit ZE 102, d.h. die sechste Einheit 109, ein automatisches Notsignal, umfassend das Attribut $A_{FZ}$ (das das Vorliegen eines Unfalls angibt) und die Position $POS_{FZ}$ übermittelt. Die sechste Einheit 109 ermittelt daraufhin basierend auf dem Attribut $A_{FZ}(POS_{FZ})$ und der Position $POS_{FZ}$ automatisch eine Einhüllende EH** eines flächigen geographischen Teilbereichs TB** um die Position $POS_{FZ}$ des Fahrzeugs FZ und ein diesem Teilbereich TB** zugeordnetes Attribut K** und stellt beides der Zentraleinheit ZE 102 als einen der Teilbereiche **TB** und der zugeordneten Attribute **K** bereit. Die Zentraleinheit ZE 102 übermittelt in diesem Ausführungsbeispiel für alle Teilbereiche **TB** die zugeordneten Einhüllenden $EH_i$ sowie die zugeordneten Attribute $K_i$ an das Fahrzeug F.

Das Fahrzeug F nähert sich vorliegend von rechts nach links dem Fahrzeug FZ auf derselben Fahrspur. Die zweite Einheit 104 des Fahrzeugs F ermittelt basierend auf den von der Zentraleinheit ZE 102 bereitgestellten Daten sowie der von der ersten Einheit 103 ermittelten aktuellen Position POSF des Fahrzeugs F 101 fortwährend den Abstand $d_{EH*}(POS_F)$ des Fahrzeugs F 101 zur Einhüllenden EH* des zur Position POSF nächstliegenden Teilbereiches TB*.

Durch die Einheit 105 des Fahrzeugs F 101 erfolgen abhängig von dem Abstand $d_{EH*}(POS_F)$ und dem den nächstliegenden Teilbereich TB* (vorliegend = TB**) zugeordneten Attribut K* (vorliegend = K**) automatischer Steuereingriffe SEG in die Längs- und/oder Quersteuerung/-regelung des Fahrzeugs F 101, die das Fahrzeug F vorliegend kontinuierlich abbremsen, sodass beim Erreichen der Einhüllenden EH* das Fahrzeug stillsteht.

Ein Übersteuern der autonomen Steuereingriffe SEG durch manuelle Steuereingaben des Fahrers kann vorteilhaft abhängig vom Attribut K* möglich sein. Vorteilhaft ist ein solches Übersteuern im Regelfall durch den Fahrer möglich und nur bei besonderen Attributen K*, die eine besonders hohe Gefährdungsintensität angeben nicht möglich.

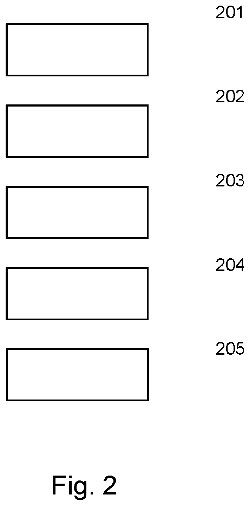

**Fig.** 2 zeigt einen Ablaufplan eines vorgeschlagenen Verfahrens zur automatischen Steuerung eines Fahrzeugs F 101 in einem Verkehrswegenetz, mit folgenden Schritten: Bereitstellen 201 jeweiliger Einhüllender $EH_i$ einer Anzahl I flächiger geographischer Teilbereiche $TB_i$ des Verkehrswegenetzes sowie für jeden der geographischen Teilbereiche $TB_i$; Bereitstellen eines zugeordneten Attributs $K_i$ durch eine Zentraleinheit ZE 102, mit i = 1, ..., I und I $\geq$ 1 und $TB_i \in$ {$TB_1$, ..., $TB_I$} = **TB**, wobei zumindest einer der Teilbereiche $TB_i$ nur einen Verkehrsweg und zumindest ein weiterer der Teilbereiche $TB_i$ nur ein an einen Verkehrsweg angrenzendes Gelände umfasst, wobei das Attribut $K_i$ eine Intensität einer Gefahr angibt, die sich bei einem Eindringen des Fahrzeugs F 101 in den jeweiligen geographischen Teilbereich $TB_i$ für das Fahrzeug F 101 selbst und/oder sich für im Teilbereich $TB_i$ angeordnete Objekte ergibt, mit $K_i \in$ {$K_1$, ..., KN} = Kund N $\geq$ 1; Übermitteln 202 einer oder mehrerer Einhüllenden $EH_i$ sowie der zugeordneten Attribute $K_i$ von der Zentraleinheit ZE 102 an das Fahrzeug F 101; Ermitteln 203 der aktuellen Position POSF des Fahrzeugs F 101 im Verkehrswegenetz; Ermitteln 204 eines Abstands $d_{EH*}(POS_F)$ des Fahrzeugs F 101 zur Einhüllenden EH* des zur Position POSF nächstliegenden Teilbereiches TB*, wobei gilt: TB* $\in$ **TB**; und Ausführen 205 automatischer Steuereingriffe SEG in die Längs- und/oder Quersteuerung/-regelung des Fahrzeugs F 101, wobei die automatischen Steuereingriffe SEG abhängig von dem Abstand $d_{EH*}(POS_F)$ und dem dem nächstliegenden Teilbereich TB* zugeordneten Attribut K* erfolgen:

$$(1) \quad SEG = SEG(d_{EH*}(POS_F), K*), \text{ wobei gilt: } K* \in \underline{\textbf{\textit{K}}}.$$

Bezugszeichenliste

101 Fahrzeug F
102 Zentraleinheit

103    erste Einheit
104    zweite Einheit
105    dritte Einheit
106    vierte Einheit
107    fünfte Einheit
108    Schnittstelle zur manuellen Eingabe
109    sechste Einheit
110    siebte Einheit
111    Fahrzeug FZ
112    Verkehrsinfrastruktureinheit $V_{infra}$

201-205    Verfahrensschritte

**Patentansprüche**

**1.** System zur automatischen Steuerung eines Fahrzeugs F (101) in einem Verkehrswegenetz, mit einer Zentraleinheit ZE (102), die jeweilige Einhüllende $EH_i$ einer Anzahl I flächiger geographischer Teilbereiche $TB_i$ des Verkehrswegenetzes sowie für jeden der geographischen Teilbereiche $TB_i$ ein zugeordnetes Attribut $K_i$ bereitstellt, mit i = 1, ..., I und I $\geq$ 1 und $TB_i \in \{TB_1, ..., TB_I\}$ = $\underline{\textit{TB}}$, wobei zumindest einer der Teilbereiche $TB_i$ nur einen Verkehrsweg und zumindest ein weiterer der Teilbereiche $TB_i$ nur ein an einen Verkehrsweg angrenzendes Gelände umfasst, wobei das Attribut $K_i$ eine Intensität einer Gefahr angibt, die sich bei einem Eindringen des Fahrzeugs F (101) in den jeweiligen geographischen Teilbereich $TB_i$ für das Fahrzeug F (101) selbst und/oder sich für im Teilbereich $TB_i$ angeordnete Objekte ergibt, mit $K_i \in \{K_1, ..., KN\}$ = $\underline{\textit{K}}$ und N $\geq$ 1, wobei die Zentraleinheit ZE (102) und das Fahrzeug F (101) zur Datenkommunikation, einschließlich zur Übertragung der Einhüllenden $EH_i$ sowie der zugeordneten Attribute $K_i$ von der Zentraleinheit (102) an das Fahrzeug F (101) eingerichtet und ausgeführt sind, und das Fahrzeug F (101) aufweist: eine erste Einheit (103) zur Ermittlung der aktuellen Position POSF des Fahrzeugs F (101) im Verkehrswegenetz, eine zweite Einheit (104) zur Ermittlung eines Abstands $d_{EH^*}(POS_F)$ des Fahrzeugs F (101) zur Einhüllenden EH* des zur Position POSF nächstliegenden Teilbereiches TB*, wobei gilt: TB* $\in$ $\underline{\textit{TB}}$, und eine dritte Einheit (105) zur Ausführung automatischer Steuereingriffe SEG in die Längs- und/oder Quersteuerung/-regelung des Fahrzeugs F (101), wobei die automatischen Steuereingriffe SEG abhängig von dem Abstand $d_{EH^*}(POS_F)$ und dem dem nächstliegenden Teilbereich TB* zugeordneten Attribut K* erfolgen:

$$(1) \qquad SEG = SEG(d_{EH^*}(POS_F), K^*), \text{ wobei gilt: } K^* \in \underline{\textit{K}}.$$

**2.** System nach Anspruch 1,
bei dem die dritte Einheit (105) dazu ausgeführt und eingerichtet ist, automatische Steuereingriffe SEG($d_{EH^*}(POS_F)$, K*) erst dann auszuführen, wenn der Abstand $d_{EH^*}(POS_F)$ zu dem zur Position POSF nächstliegenden Teilbereich TB* einen vom zugeordneten Attribut K* abhängigen vorgegebenen Abstandsgrenzwert $G_{K^*}$ erreicht oder unterschreitet.

**3.** System nach Anspruch 1 oder 2,
bei dem die automatischen Steuereingriffe SEG($d_{EH^*}(POS_F)$, K*) zumindest einen der folgenden Steuereingriffe umfassen:

- eine Verringerung der Geschwindigkeit des Fahrzeugs F (101) auf eine von K* und/oder von $d_{EH^*}(POS_F)$ abhängige vorgegebene Geschwindigkeit $v_{soll}$, und/oder
- ein Abbremsen des Fahrzeugs F (101) in den Stillstand, und/oder
- eine Längs- und Quersteuerung/-regelung derart, dass das Fahrzeug F (101) nicht in den nächstliegenden Teilbereich TB* eindringt.

**4.** System nach einem der Ansprüche 1 bis 3,
bei dem das Fahrzeug F (101) eine vierte Einheit (106) aufweist, die abhängig vom Abstand $d_{EH^*}(POS_F)$ zu dem der Postion POSF nächstliegenden Teilbereich TB* und abhängig vom zugeordneten Attribut K* automatisch ein System des Fahrzeugs F (101) zur Ausgabe optischer und/oder akustischer und/oder haptischer Signale an Insassen des Fahrzeugs F (101) und/oder an eine Umgebung des Fahrzeugs F (101) ansteuert.

**5.** System nach einem der Ansprüche 1 bis 4,
bei dem das Fahrzeug F (101) eine fünfte Einheit (107) aufweist, die abhängig vom Abstand $d_{EH^*}(POS_F)$ zu dem der Position POSF nächstliegenden Teilbereich TB* und abhängig vom zugeordneten Attribut K* automatisch das Fahrzeug F (101) in den Stillstand abbremst und anschließend elektrisch stilllegt.

**6.** System nach einem der Ansprüche 1 bis 5,
bei dem die Zentraleinheit ZE (102) eine Schnittstelle (108) zur manuellen Eingabe/Vorgabe von Einhüllenden $EH_i$ von flächigen geographischen Teilbereichen $TB_i$ des Verkehrswegenetzes aufweist.

**7.** System nach einem der Ansprüche 1 bis 6,
bei dem eine sechste Einheit (109) vorhanden ist, die auf Basis der von einem Fahrzeug FZ (111) im Verkehrswegenetz an die sechste Einheit (109) übertragenen aktuellen Position $POS_{FZ}$ des Fahrzeugs FZ (111) und abhängig von einem an die sechste Einheit (109) vom Fahrzeug FZ (111) übertragenen Attribut $A_{FZ}$, das einen kritischen technischen und/oder verkehrstechnischen Zustand des Fahrzeugs FZ (111) angibt, automatisch eine Einhüllende EH** eines flächigen geographischen Teilbereichs TB** des Verkehrswegenetzes um die Position $POS_{FZ}$ und ein dem Teilbereich TB** zugeordnetes Attribut K** ermittelt und an die Zentraleinheit ZE (102) bereitstellt, wobei gilt TB** $\in$ ___TB___ und K** $\in$ K.

**8.** System nach Anspruch 7,
bei dem für die Einhüllende EH** des flächigen geographischen Teilbereichs TB** folgende Zeitabhängigkeit gilt:

$$(2) \qquad EH^{**} = EH^{**}(POS_{FZ}(t)) \text{ und } TB^{**} = TB^{**}(POS_{FZ}(t)).$$

**9.** System nach einem der Ansprüche 1 bis 8,
bei dem eine siebte Einheit (110) vorhanden ist, die auf Basis eines von einer an einer Position $POS_{infra}$ im Verkehrswegenetz angeordneten Verkehrsinfrastruktureinheit $V_{infra}$ (112), die zumindest ein Sensorsystem zur Erfassung eines Verkehrszustandes und/oder eines meteorologischen Zustandes in einer Umgebung der Verkehrsinfrastruktureinheit $V_{infra}$ (112) aufweist, an die siebte Einheit (110) übertragenen Attributes $A_{infra}$, das das Vorliegen eines kritischen Verkehrszustands und/oder eines kritischen meteorologischen Zustands in der Umgebung der Verkehrsinfrastruktureinheit $V_{infra}$ (112) angibt, automatisch eine Einhüllende EH*** eines flächigen geographischen Teilbereichs TB*** um die Position $POS_{infra}$ und ein zugeordnetes Attribut A*** ermittelt und an die Zentraleinheit (102) bereitstellt, wobei gilt: TB*** $\in$ ___TB___ und K*** $\in$ ___K,___ und wobei die Verkehrsinfrastruktureinheit $V_{infra}$ (112) dazu ausgeführt und eingerichtet ist, auf Basis von mit dem Sensorsystem erfassten Sensordaten ein Vorliegen eines kritischen Verkehrszustandes und/oder eines kritischen meteorologischen Zustandes und ein zugeordnetes Attribut $A_{infra}$ zu ermitteln.

**10.** Verfahren zur automatischen Steuerung eines Fahrzeugs F (101) in einem Verkehrswegenetz, mit folgenden Schritten:

- Bereitstellen (201) jeweiliger Einhüllender $EH_i$ einer Anzahl I flächiger geographischer Teilbereiche $TB_i$ des Verkehrswegenetzes sowie für jeden der geographischen Teilbereiche $TB_i$ Bereitstellen eines zugeordneten Attributs $K_i$ durch eine Zentraleinheit (102), mit i = 1, ..., I und I $\geq$ 1 und $TB_i \in \{TB_1, ..., TB_I\}$ = ___TB,___ wobei zumindest einer der Teilbereiche $TB_i$ nur einen Verkehrsweg und zumindest ein weiterer der Teilbereiche $TB_i$ nur ein an einen Verkehrsweg angrenzendes Gelände umfasst, wobei das Attribut $K_i$ eine Intensität einer Gefahr angibt, die sich bei einem Eindringen des Fahrzeugs (101) in den jeweiligen geographischen Teilbereich $TB_i$ für das Fahrzeug F (101) selbst und/oder sich für im Teilbereich $TB_i$ angeordnete Objekte ergibt, mit $K_i \in \{K_1, ..., K_N\}$ = K und N $\geq$ 1,
- Übermitteln (202) einer oder mehrerer Einhüllenden $EH_i$ sowie der zugeordneten Attribute $K_i$ von der Zentraleinheit (102) an das Fahrzeug F (101),
- Ermitteln (203) der aktuellen Position POSF des Fahrzeugs F (101) im Verkehrswegenetz,
- Ermitteln (204) eines Abstands $d_{EH^*}(POS_F)$ des Fahrzeugs F (101) zur Einhüllenden EH* des zur Position POSF nächstliegenden Teilbereiches TB*, wobei gilt: TB* $\in$ ___TB,___
- Ausführen (205) automatischer Steuereingriffe SEG in die Längs- und/oder Quersteuerung/-regelung des Fahrzeugs F (101), wobei die automatischen Steuereingriffe SEG abhängig von dem Abstand $d_{EH^*}(POS_F)$ und dem dem nächstliegenden Teilbereich TB* zugeordneten Attribut K* erfolgen:

$$(1) \quad \text{SEG} = \text{SEG}(d_{EH^*}(\text{POS}_F), K^*), \text{ wobei gilt: } K^* \in \underline{\textbf{\textit{K}}}.$$

**Claims**

1. System for the automatic control of a vehicle F(101) in a traffic route network, with a central unit ZE(102), which provides the respective envelope EHi of a number I of two-dimensional geographical sub-regions TBi of the traffic route network, and for each of the geographical sub-regions TBi an assigned attribute Ki, where i = 1, ... ,I and I $\geq$ 1 and TBi $\in$ {TB$_1$ , ... , TB$_I$} = $\textbf{\textit{TB}}$, wherein

   at least one of the sub-regions TBi comprises only a traffic route, and at least another of the sub-regions TBi comprises only a terrain adjacent to a traffic route, wherein
   the attribute Ki indicates an intensity of a hazard, which arises for the vehicle F(101) itself, and/or for objects arranged in the sub-region TBi, in the event of an intrusion of the vehicle F(101) into the respective geographical sub-region TBi, where Ki $\in$ {K$_1$ , ... , K$_N$} = K, and N $\geq$ 1, wherein
   the central unit ZE(102) and the vehicle F(101) are equipped and embodied for data communication, including for the transmission of the envelope EHi together with the assigned attributes Ki from the central unit (102) to the vehicle F(101), and the vehicle F(101) has: a first unit (103) for the determination of the current position POS$_F$ of the vehicle F(101) in the traffic route network, a second unit (104) for the determination of a distance $d_{EH^*}$(POS$_F$) of the vehicle F(101) from the envelope EH* of the sub-region TB* closest to the position POS$_F$ , wherein the following applies: TB* $\in$ $\textbf{\textit{TB}}$,
   and a third unit (105) for the execution of automatic control interventions SEG in the longitudinal and/or lateral control/regulation of the vehicle F(101), wherein
   the automatic control interventions SEG take place depending on the distance $d_{EH^*}$(POS$_F$) and the attribute K* assigned to the nearest sub-region TB*:

$$(1) \quad \text{SEG} = \text{SEG}(d_{EH^*}(\text{POS}_F), K^*),$$

   wherein the following applies: K* $\in$ $\underline{K}$.

2. System according to Claim 1, in which
   the third unit (105) is embodied and equipped to execute automatic control interventions SEG ($d_{EH^*}$(POS$_F$), K*) only when the distance ($d_{EH^*}$(POS$_F$)) to the sub-region TB* nearest to the position POS$_F$ reaches or falls below a predetermined distance limit value $G_{K^*}$ that is dependent on the assigned attribute K*.

3. System according to Claim 1 or 2, in which
   the automatic control interventions SEG($d_{EH^*}$(POS$_F$), K*) comprise at least one of the following control interventions:

   - a reduction in the speed of the vehicle F(101) to a predetermined speed $v_{soll}$ that is dependent on K* and/or on ($d_{EH^*}$(POS$_F$)), and/or
   - a braking of the vehicle F(101) to a standstill, and/or
   - longitudinal and lateral control/regulation such that the vehicle F(101) does not enter into the nearest sub-region TB*

4. System according to one of the Claims 1 to 3, in which the vehicle F(101) has a fourth unit (106), which, depending on the distance ($d_{EH^*}$(POS$_F$)) to the sub-region TB* nearest to the position POS$_F$, and depending on the assigned attribute K*, automatically activates a system of the vehicle F(101) for the output of visual, and/or acoustic, and/or haptic, signals to occupants of the vehicle F(101), and/or to an environment of the vehicle F(101).

5. System according to one of the Claims 1 to 4, in which the vehicle F(101) has a fifth unit (107) which, depending on the distance ($d_{EH^*}$(POS$_F$)) to the sub-region TB* nearest to the position POS$_F$, and depending on the assigned attribute K*, automatically brakes the vehicle F(101) to a standstill, and then electrically immobilises it.

6. System according to one of the Claims 1 to 5, in which the ZE central unit (102) has an interface (108) for the manual input/specification of envelopes EHi of two-dimensional geographical sub-regions TBi of the traffic route network.

**7.** System according to one of the Claims 1 to 6, in which a sixth unit (109) is present which, on the basis of the current position $POS_{FZ}$ of the vehicle FZ(111), transmitted to the sixth unit (109) by a vehicle FZ(111) in the traffic route network, and depending on an attribute $A_{FZ}$ transmitted to the sixth unit (109) by the vehicle FZ(111), which indicates a critical technical and/or traffic-related state of the vehicle FZ(111), an envelope EH\*\* of a two-dimensional geographical sub-region TB\*\* of the traffic route network around the position $POS_{FZ}$, and an attribute K\*\* assigned to the sub-region TB\*\*, is automatically determined and provided to the central unit ZE(102), wherein the following applies TB\*\* € ***TB*** and K\*\* € ***K***.

**8.** System according to Claim 7, in which
the following time dependence applies to the envelope EH\*\* of the two-dimensional geographical sub-region TB\*\*:

$$(1) \qquad EH** = EH**(POS_{FZ}(t)) \text{ and } TB** = TB**(POS_{FZ}(t)).$$

**9.** System according to one of the Claims 1 to 8, in which a seventh unit (110) is present, which, on the basis of an attribute Aintra transmitted to the seventh unit (110) by a traffic infrastructure unit Vintra(112) arranged at a position POSintra in the traffic route network, which has at least one sensor system for the detection of a traffic state, and/or a meteorological state, in a vicinity of the traffic infrastructure unit Vintra(112), which attribute indicates the presence of a critical traffic state, and/or a critical meteorological state, in the environment of the traffic infrastructure unit Vintra(112), automatically determines an envelope EH\*\*\* of a two-dimensional geographical sub-region TB\*\*\* around the position POSintra, and determines an assigned attribute A\*\*\* and provides it to the central unit (102), wherein the following applies: TB\*\*\* € ***TB*** and K\*\*\* € ***K***. , and wherein
the traffic infrastructure unit Vintra(112) is embodied and equipped to determine, on the basis of sensor data acquired with the sensor system, the presence of a critical traffic condition, and/or a critical meteorological condition, and to determine an assigned attribute Aintra.

**10.** Method for the automatic control of a vehicle F(101) in a traffic route network, with the following steps:

- provision (201) of respective envelopes EHi of a number I of two-dimensional geographic sub-regions TBi of the traffic route network, and, for each of the geographic sub-regions TBi , provision of an assigned attribute Ki by a central processing unit (102), where i = 1 , ... , I and I $\geq$ 1 and TBi € {$TB_1$ ,..., $TB_I$} = ***TB,*** wherein

at least one of the sub-regions TBi comprises only a traffic route, and at least another of the sub-regions TBi comprises only a terrain adjacent to a traffic route, wherein
the attribute Ki indicates an intensity of a hazard, which arises in the event of an intrusion of the vehicle (101) into the respective geographical sub-region TBi for the vehicle F(101) itself, and/or arises for objects arranged in the sub-region TBi, where $K_i$ € {$K_1$ ,..., $K_N$ } = ***K*** and N $\geq$ 1,

- transmission (202) of one or a plurality of envelopes EHi and the assigned attributes Ki from the central unit (102) to the vehicle F(101),
- determination (203) of the current position $POS_F$ of the vehicle F(101) in the traffic route network,
- determination (204) of a distance $d_{EH*}(POS_F)$ of the vehicle F(101) from the envelope EH\* of the sub-region TB\* closest to the position $POS_F$, wherein the following applies: TB\* € ***TB,***
- execution (205) of automatic control interventions SEG in the longitudinal and/or lateral control/regulation of the vehicle F(101), wherein
the automatic control interventions SEG take place depending on the distance $d_{EH*}(POS_F)$ and the attribute K\* assigned to the nearest sub-region TB\*:

$$(1) \qquad SEG = SEG (d_{EH*}(POS_F), K*),$$

wherein the following applies: $K* \in$ ***K***.

**Revendications**

1. Système de commande automatique d'un véhicule F (101) dans un réseau routier, comprenant une unité centrale ZE (102) qui fournit une amplitude EHi respective d'un nombre I de zones partielles $TB_i$ géographiques planes du réseau routier ainsi que pour chacune des zones partielles TBi géographiques, un attribut Ki assigné, avec i = 1, ..., I et I $\geq$ 1 et TBi $\in$ {$TB_1$, ..., $TB_I$} = **TB,** dans lequel au moins une des zones partielles TBi comprend uniquement une voie routière et au moins une autre des zones partielles TBi comprend uniquement un terrain adjacent à une voie routière, dans lequel l'attribut Ki indique une intensité d'un danger qui survient lors d'une pénétration du véhicule F (101) dans la zone partielle TBi géographique respective pour le véhicule F (101) lui-même et/ou pour des objets disposés dans la zone partielle TBi, avec Ki $\in$ {$K_1$, ..., $K_N$} = K et N $\geq$ 1, dans lequel l'unité centrale ZE (102) et le véhicule F (101) sont équipés et conçus pour la communication de données, y compris la transmission de l'amplitude EHi ainsi que des attributs Ki assignés de l'unité centrale ZE (102) au véhicule F (101), et le véhicule F (101) présente : une première unité (103) pour déterminer la position actuelle $POS_F$ du véhicule F (101) dans le réseau routier, une seconde unité (104) pour déterminer un écart $d_{EH^*}(POS_F)$ du véhicule F (101) par rapport à l'amplitude EH* de la zone partielle TB* la plus proche de la position $POS_F$, dans lequel vaut TB* $\in$ **TB,** et une troisième unité (105) pour l'exécution d'interventions de commande SEG automatiques dans la régulation/commande longitudinale et/ou latérale du véhicule F (101), dans lequel les interventions de commande SEG automatiques sont exécutées en fonction de l'écart $d_{EH^*}(POS_F)$ et de l'attribut K* assigné à la zone partielle TB* la plus proche :

$$(1) \quad SEG = SEG(d_{EH^*}(POS_F), K^*), \text{ dans lequel} : K^* \varepsilon \underline{\textbf{K}}.$$

2. Système selon la revendication 1, dans lequel la troisième unité (105) est conçue et équipée pour n'exécuter des interventions de commande $SEG(d_{EH^*}(POS_F), K^*)$ automatiques que lorsque l'écart $d_{EH^*}(POS_F)$ par rapport à la position partielle TB* la plus proche de la position $POS_F$, atteint ou est en-dessous d'une valeur limite d'écart $G_{K^*}$ prédéfinie fonction de l'attribut K* assigné.

3. Système selon la revendication 1 ou 2, dans lequel les interventions de commande $SEG(d_{EH^*}(POS_F), K^*)$ automatiques comprennent au moins une des interventions de commande suivantes :

   - une diminution de la vitesse du véhicule F (101) à une vitesse $v_{soll}$ prédéfinie fonction de K* et/ou de $d_{EH^*}(POS_F)$, et/ou
   - un freinage du véhicule F (101) à l'arrêt, et/ou
   - une régulation/commande longitudinale et/ou latérale de telle sorte que le véhicule F (101) ne pénètre pas dans la position partielle TB* la plus proche.

4. Système selon l'une des revendications 1 à 3, dans lequel le véhicule F (101) présente une quatrième unité (106) qui pilote automatiquement, en fonction de l'écart $d_{EH^*}(POS_F)$ du véhicule F (101) par rapport à la zone partielle TB* la plus proche de la position $POS_F$, et en fonction de l'attribut K* assigné, un système du véhicule F (101) pour émettre des signaux optiques et/ou acoustiques et/ou haptiques à des passagers du véhicule F (101) et/ou à un environnement du véhicule F (101).

5. Système selon l'une des revendications 1 à 4, dans lequel le véhicule F (101) comprend une cinquième unité (107) qui, en fonction de l'écart $d_{EH^*}(POS_F)$ du véhicule F (101) par rapport à la zone partielle TB* la plus proche de la position $POS_F$, et en fonction de l'attribut K* assigné, freine automatiquement le véhicule F (101) à l'arrêt et l'arrête ensuite électriquement.

6. Système selon l'une des revendications 1 à 5, dans lequel l'unité centrale ZE (102) présente une interface (108) pour la saisie/consigne manuelle d'amplitudes EHi de zones partielles TBi géographiques planes du réseau routier.

7. Système selon l'une des revendications 1 à 6, dans lequel une sixième unité centrale (109) est présente qui, en se basant sur une position actuelle $POS_{FZ}$ d'un véhicule FZ (111) transmise à la sixième unité centrale (109) par le véhicule FZ (111) dans le réseau routier et en fonction d'un attribut $A_{FZ}$ transmis par à la sixième unité centrale (109) par le véhicule FZ (111) qui indique un état technique et/ou routier critique du véhicule FZ (111), détermine automatiquement et fournit à l'unité centrale ZE (102), une amplitude EH** d'une zone partielle TB** géographique plane du réseau router autour de la position $POS_{FZ}$ et un attribut K** assigné à la zone partielle TB**, dans lequel TB** $\in$ **TB** et K** $\in$ $\underline{K}$.

8. Système selon la revendication 7, dans lequel la caractéristique fonction temporelle suivante vaut pour l'amplitude EH** de la zone partielle TB** géographique plane :

$$(2) \qquad EH^{**} = EH^{**}(POS_{FZ}(t)) \text{ et } TB^{**} = TB^{**}(POS_{FZ}(t)).$$

9. Système selon l'une des revendications 1 à 8,
dans lequel une septième unité (110) est présente qui, en se basant sur un attribut Ainfra qui indique la présence d'un état du trafic critique et/ou d'un état météorologique critique dans l'environnement d'une unité d'infrastructure routière Vinfra (112), transmis à la septième unité (110) par l'unité d'infrastructure routière Vinfra (112) disposée dans le réseau routier à une position POSinfra qui présente au moins un système de capteurs pour détecter un état du trafic et/ou un état météorologique dans un environnement de l'unité d'infrastructure routière Vinfra (112), détermine automatiquement et fournit à l'unité centrale (102), une amplitude EH*** d'une zone partielle TB*** géographique plane autour de la position POSinfra et un attribut A*** assigné, dans lequel : TB*** ∈ **TB** et K*** ∈ **K** et dans lequel l'unité d'infrastructure routière Vinfra (112) est ainsi conçue et équipée pour déterminer, en se basant sur des données de capteur détectées avec le système de capteurs, une présence d'un état du trafic critique et/ou d'un état météorologique critique, et un attribut Ainfra assigné.

10. Procédé pour la commande automatique d'un véhicule F (101) dans un réseau routier, comprenant les étapes suivantes :

- fourniture (201) de l'amplitude EHi respective d'un nombre I de zones partielles TBi géographiques planes du réseau routier ainsi que pour chacune des zones partielles TBi géographiques, un attribut $K_i$ assigné par une unité centrale (102), avec i = 1, ..., I et I ≥ 1 et TBi ∈ {TB$_1$, ..., TB$_I$} = **TB,** dans lequel au moins une des zones partielles TBi comprend uniquement une voie routière et au moins une autre des zones partielles TBi comprend uniquement un terrain adjacent à une voie routière, dans lequel l'attribut Ki indique une intensité d'un danger qui survient lors d'une pénétration du véhicule F (101) dans la zone partielle TBi géographique respective pour le véhicule F (101) lui-même et/ou pour des objets disposés dans la zone partielle TBi, avec Ki ∈ {K$_1$, ..., K$_N$} = **K** et N ≥ 1,
- transmission (202) d'une ou plusieurs amplitudes EHi ainsi que des attributs Ki assignés de l'unité centrale (102) au véhicule F (101),
- détermination (203) de la position actuelle POS$_F$ du véhicule F (101) dans le réseau routier,
- détermination (204) d'un écart $d_{EH^*}(POS_F)$ du véhicule F (101) par rapport à l'amplitude EH* de la zone partielle TB* la plus proche de la position POS$_F$, dans lequel : TB* ∈ **TB,**
- exécution (205) d'interventions de commande SEG automatiques dans la régulation/commande longitudinale et/ou latérale du véhicule F (101), dans lequel les interventions de commande SEG automatiques sont exécutées en fonction de l'écart $d_{EH^*}(POS_F)$ et de l'attribut K* assigné à la zone partielle TB* la plus proche :

$$(1) \qquad SEG = SEG(d_{EH^*}(POS_F), K^*), \text{ dans lequel : } K^* \varepsilon \underline{K}.$$

108

109

110          102

EHi
Ki          ZE

POSinfra     POSFZ        EHi
Ainfra       AFZ          Ki

Vinfra       FZ           F

112          111          103

104

105

106

107

dEH*(POSF)          101

TB*    EH*

Fig. 1

201

202

203

204

205

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6084510 A

- DE 10210546 A1